# EUROPÄISCHE PATENTSCHRIFT

(11) **EP 2 166 236 B1**
(45) Veröffentlichungstag und Bekanntmachung des Hinweises auf die Patenterteilung: **27.06.2012**
(21) Anmeldenummer: 08016629.1
(22) Anmeldetag: 22.09.2008
(51) Int. Cl.: F16B 13/12

(54) **Verfahren zum Einbringen eines Befestigungselements in eine Leichtbauplatte**
Method for feeding a fixing element into a light building board
Procédé destiné à l'introduction d'un élément de fixation dans un panneu léger de construction

(43) Veröffentlichungstag der Anmeldung: 24.03.2010
(73) Patentinhaber: Homag Holzbearbeitungssysteme AG, 72296 Schopfloch (DE)
(72) Erfinder: Sturm Gotthilf, 72293 Glatten (DE)
(74) Vertreter: HOFFMANN EITLE

(56) Entgegenhaltungen:
- EP-A- 0 845 605
- EP-A- 1 072 802
- DE-U- 6 932 416
- JP-A- 61 209 829
- US-A- 5 160 225
- US-A1- 2005 050 720
- US-A1- 2005 175 429

## Beschreibung

Die Erfindung betrifft ein Verfahren zum Einbringen eines Befestigungselements in ein Werkstück, insbesondere in eine Leichtbauplatte.

### TECHNISCHES GEBIET

Leichtbauplatten, so wie sie üblicherweise im Bereich der Möbelherstellung oder im Bereich der Türherstellung verwendet werden, bestehen typischerweise aus zwei oder drei parallel zueinander angeordneten, relativ dünnen Decken, welche über Abstandselemente miteinander verbunden sind. Der zwischen den Decken entstehende Zwischenraum ist üblicherweise mit einem Füllmaterial ausgefüllt, welches häufig Wellpappe oder ein anderes Kartonmaterial ist. Je nach gewünschter Stärke der Leichtbauplatten können auch eine oder mehrere Zwischendecken vorgesehen sein, welche eine Stabilisierung der Leichtbauplatte ermöglichen. In einer anderen typischen Ausbildung ist in dem Zwischenraum zwischen den jeweiligen Decken ein Material geringerer Dichte vorgesehen.

Die in der oben genannten Art ausgebildeten Leichtbauplatten weisen üblicherweise eine Stärke von 15-100 mm auf, wobei die jeweiligen Decken dabei nur eine Stärke von jeweils 0,5 mm bis 8 mm aufweisen.

Um an solchen Leichtbauplatten Bauelemente wie beispielsweise Griffe, Türbeschläge oder andere Beschläge anbringen zu können, oder aber um zwei Leichtbauplatten miteinander verbinden zu können, müssen Befestigungselemente in die jeweilige Leichtbauplatte eingebracht werden, welche eine stabile Befestigung ermöglichen. Aufgrund der geringen Deckenstärken werden zur Erhöhung der Stabilität die Befestigungselemente dabei typischerweise sowohl in der oberen als auch in der unteren Decke verankert. Derart in die Leichtbauplatte eingebrachte Befestigungselemente dienen dann als Befestigungspunkte, an denen die Griffe, Türbeschläge oder andere Beschläge befestigt werden können.

Je dünner die jeweiligen Decken sind, desto anfälliger sind sie gegen mechanische Beanspruchung.

Beim Setzen der Befestigungselemente, beispielsweise beim Setzen von Dübeln oder Ankern, wird in die Leichtbauplatten zunächst eine Bohrung eingebracht, welche in der oberen Platte als Durchgangsbohrung und in der unteren Platte als Sacklochbohrung ausgeführt wird, um die äußere Anmutung der Leichtbauplatte zumindest auf der unteren Seite nicht zu verändern. Bei der Verwendung von besonders dünnen Decken kann auch auf die Sacklochbohrung in der unteren Decke verzichtet werden und das jeweilige Befestigungselement steht nur auf der Decke auf.

Da die Befestigungselemente typischer Weise eine Bohrung benötigen, welche frei von Schmutz, Klebstoffresten und Spänen ist, werden die Bohrungen bislang entweder durch Ausblasen mit Druckluft oder mittels Absaugen von den Fremdkörper gereinigt. Es kann hierbei jedoch vorkommen, dass sich die jeweiligen durch die Druckluft aufgewirbelten Fremdkörper nach dem Abschalten der Druckluftzufuhr wieder in dem Bohrloch ablegen, da sie prinzipiell in der Leichtbauplatte zwischen den jeweiligen Decken gefangen sind. In einem Fall, in dem sich die jeweiligen Fremdkörper wieder am Boden der Sacklochbohrung absetzen, oder aber von diesem nicht entfernt werden können, kann es daher vorkommen, dass beim Einpressen des jeweiligen Befestigungselements die Leichtbauplatte beschädigt wird, beispielsweise durch ein Herausdrücken des Deckenmaterials unter der Sacklochbohrung. Dies kann zu einer Delle in der unteren Decke, oder im ungünstigsten Fall gar zu einem Durchbruch der unteren Decke der jeweiligen Leichtbauplatte führen. Weiterhin kann die Festigkeit der Verankerung des jeweiligen Befestigungselements in der Leichtbauplatte durch die jeweiligen Fremdkörper beeinträchtigt sein.

Beim Aussaugen des Bohrlochs können ähnliche Probleme auftreten, da insbesondere nur Fremdkörperpartikel abgesaugt werden können, die durch die Absaugöffnung der jeweiligen Sauglanze hindurch treten können. Da der Durchmesser der jeweiligen Sauglanze jedoch kleiner ist als der Bohrungsdurchmesser in der Leichtbauplatte, kann hier nicht sichergestellt werden, dass sämtliche Fremdkörper abgesaugt werden, mit den gleichem möglichen Problemen, die bereits oben beschrieben wurden.

Weiterhin kann es vorkommen, dass beim Durchbohren der oberen Decke Restteile von der oberen Decke abplatzen, welche größer sind als der Bohrungsdurchmesser. Diese Teile können durch die Bohrung selbst überhaupt nicht entfernt werden.

EP 1 072 802 A1 bezieht sich auf einen Ankerbolzen und ein Werkzeug zum Installieren des Bolzens.

DE 69 32 416 U bezieht sich auf einen Spreizdübel, welcher nicht eingeschraubt werden braucht, sondern eingeschlagen wird.

US 2005/0050720 A1 bezieht sich auf eine rotatorisch und axial angetriebene Vorrichtung zum Zusammensetzen, Verpressen und/oder Stanzen von Gewinde tragenden Elementen.

EP 0 845 605 A1 bezieht sich auf einen selbstschneidenden Anker.

JP 61-209829 A bezieht sich auf eine Drehvorrichtung.

### BESCHREIBUNG DER ERFINDUNG

Entsprechend liegt der vorliegenden Erfindung die Aufgabe zu Grunde, ein Verfahren bereitzustellen, mit dessen Hilfe Befestigungselemente zuverlässig in ein Werkstück eingebracht werden können.

Diese Aufgabe wird durch ein Verfahren gemäß Anspruch 1 gelöst.

Entsprechend wird gemäß dem Verfahren zum Einbringen eines Befestigungselements, insbesondere eines Dübels, in eine Bohrung eines Werkstücks, insbesondere einer Leichtbauplatte, das Befestigungselement während des Einbringens in die Bohrung des Werkstücks zur Verdrängung von Fremdkörpern gedreht.

Durch das Drehen des Befestigungselements beim Einbringen wird insbesondere erreicht, dass Fremdkörper, welche sich beispielsweise in der Bohrung und insbesondere auch auf einer Sacklochbohrung in einer unteren Decke einer Leichtbauplatte abgelegt haben, derart verdrängt werden, dass zum Einen das jeweilige Befestigungselement in sicherem Kontakt mit der oberen Decke und der unteren Decke der jeweiligen Leichtbauplatte stehen, und zum Anderen Fremdkörper, welche sich zwischen der Stirnseite des Befestigungselements und dem Boden der Sacklochbohrung befinden, so verdrängt werden, dass sie beim Einsetzen des Befestigungselements nicht zu einer Beschädigung der unteren Decke führen.

Als Fremdkörper" wird hier jegliches Material verstanden, das an dem jeweiligen Ort, insbesondere einer Kontaktstelle zwischen dem Befestigungselement und dem Werkstück, bestimmungsgemäß nicht vorhanden sein soll und welches potentiell einer sicheren Befestigung bzw. Verankerung des Befestigungselements in dem Werkstück entgegensteht, oder das bestimmungsgemäße Setzen des Befestigungselements beeinträchtigen kann. Als Fremdkörper sind daher beispielsweise sämtliche Späne, Staub, Bohrrückstände, Klebstoffreste, Papier- und Kartonagenreste, Abplatzungen, Farbreste und andere Partikel anzusehen, die beispielsweise in dem Bohrloch oder auf der unteren Decke vorhanden sind und die zwischen das Befestigungselement und das feste Material des Werkstücks geraten können und so eine zuverlässige Befestigung oder Verankerung des Befestigungselements beeinträchtigen können.

Unter dem Begriff "Befestigungselement" wird hierin jegliche Verankerung verstanden, welche in ein Werkstück eingebracht werden kann und an welcher dann Bauteile oder andere Werkstücke angebracht werden können. Typische Beispiele für solche Befestigungselemente sind Dübel oder Befestigungshülsen, welche in ein Werkstück eingebracht werden und an welchen dann Bauteile oder andere Werkstücke befestigt werden können, insbesondere durch das Eindrehen von Schrauben in die Dübel oder die Befestigungshülsen.

Unter "Verdrängung" der Fremdkörper wird verstanden, dass die Fremdkörper zumindest von den jeweiligen Kontaktstellen zwischen dem Befestigungselement und dem Werkstück im Wesentlichen fortgeräumt bzw. fortgeschoben werden. Verdrängung der Fremdkörper bedeutet hingegen nicht notwendiger Weise die Entfernung der Fremdkörper aus dem Werkstück. Die Fremdkörper verbleiben vielmehr typischer Weise in dem Werkstück, werden aber an einen Ort innerhalb des Werkstücks verdrängt, geräumt oder verschoben, an dem sie dem sicheren Setzen und der sicheren Befestigung bzw. Verankerung des Befestigungselements nicht im Weg sind.

Durch das Verfahren wird insbesondere erreicht, dass durch die Drehung des Befestigungselements in der Bohrung des Werkstücks die jeweilige Kontaktflächen des Befestigungselements mit dem Werkstück gereinigt werden bzw. die eventuell im Bereich der Kontaktflächen vorhandenen Fremdkörper verdrängt werden.

Erfindungsgemäß wird zum Einbringen des Befestigungselements in das Werkstück zumindest ein Impuls auf das Befestigungselement aufgebracht, mit dem das Befestigungselement in das Werkstück eingetrieben wird und/oder mittels dessen ein sich in dem Befestigungselement befindlicher Klebstoffvorrat aktiviert und/oder verdrängt wird. Insbesondere wird hier ein periodischer Impuls auf das Befestigungselement aufgebracht, bevorzugt in der Form eines "hämmerns" durch die zyklische Bewegung einer Masse. Auf diese Weise kann auch ein höherviskoser Klebstoff aus dem Befestigungselement heraus verdrängt werden und das Befestigungselement in dem Werkstück verkleben.

Der Impuls bzw. die Impulse wird bzw. werden dabei entweder während des Drehens des Befestigungselements aufgebracht oder aber nach Beendigung des Drehens. In einer weiteren Ausführungsform wechseln sich Drehen und das Aufbringen des Impulses ab.

Das Aufbringen des Impulses bzw. der Impulse wird mittels eines Sensors überwacht, der das Aufbringen des Impulses bzw. der Impulse stoppt, wenn eine bestimmte Randbedingung erfüllt ist, beispielsweise eine bestimmte Planlage des Befestigungselements in dem Werkstück erreicht ist oder ein bestimmter Widerstand erreicht wird.

In einer bevorzugten Variante des Verfahrens weist das Befestigungselement mindestens eine Spreizhülse zur Verankerung des Befestigungselements in dem Werkstück und mindestens eine Spreizvorrichtung zum zumindest teilweisen Spreizen der Spreizhülse auf, wobei die Spreizhülse während des Einbringens in die Bohrung des Werkstücks zur Verdrängung von Fremdkörpern gedreht wird. Entsprechend wird bevorzugt beim Einbringen des Befestigungselements die Spreizhülse beim Einbringen in die Bohrung des Werkstücks zu Verdrängung von Fremdkörpern gedreht und nach dem Einbringen der Spreizhülse die Spreizvorrichtung zum Verspreizen relativ zu der Spreizhülse eingetrieben.

Bevorzugt werden die Spreizhülse und die in einer Vormontageposition darin angeordnete Spreizvorrichtung dabei gemeinsam in das Werkstück eingebracht, so dass ein effizienter und sicherer Setzvorgang des Befestigungselements durchgeführt werden kann.

Durch das Drehen der Spreizhülse wird sichergestellt, dass insbesondere zwischen dem Stirnbereich der Spreizhülse und dem Boden der Sacklochbohrung Fremdkörper durch die Drehung verdrängt werden. Weiterhin wird sichergestellt, dass die Spreizhülse in direktem Kontakt mit dem festen Material der oberen und unteren Decke des Werkstücks, insbesondere der Leichtbauplatte, gebracht wird, so dass eine sichere Verankerung gewährleistet ist.

Ein besonders effektives Einbringen des Befestigungselements kann dann gewährleistet werden, wenn die Spreizhülse und die Spreizvorrichtung drehfest zueinander angeordnet sind, und die Drehung der Spreizhülse über die Spreizvorrichtung aufgebracht wird. Hierdurch lässt sich ein weiterer Verfahrensschritt einsparen und es kann aufgrund der drehfesten Anordnung der Spreizhülse und des Spreizelements die Drehung von der Spreizvorrichtung auf die Spreizhülse übertragen werden. Hierdurch lässt sich insbesondere auf einfache Weise ein Drehen des Befestigungselements durch das Eingreifen eines entsprechenden Werkzeugs, insbesondere einer entsprechend geformten Schrauberklinge, in die Spreizvorrichtung erreichen.

Wenn die Spreizvorrichtung relativ zur Spreizhülse in diese eingetrieben wird um eine zuverlässige Verspreizung und damit eine zuverlässige Befestigung des Befestigungselements in dem Werkstück zu erreichen, können diese Verfahrensschritte auf diese Weise mit dem gleichen Werkzeug durchgeführt werden. Durch die Drehung wird dann gleichzeitig sicher gestellt, dass dieser Einbringvorgang nicht durch Fremdkörper behindert wird und daher ohne Beschädigung des Bodens der Sacklochbohrung bzw. der unteren Decke einer Leichtbauplatte vonstatten geht.

In einer weiteren bevorzugten Ausführungsform wird beim Einbringen des Befestigungselements in das Werkstück ein Klebstoffvorrat aktiviert, um das Befestigungselement mit dem Werkstück zu verbinden. Auf diese Weise kann eine besonders sichere Verbindung des Befestigungselements mit dem Werkstück erreicht werden.

Bevorzugt wird das Befestigungselement nur in einem Teilbereich, insbesondere dem Endbereich, der Einbringbewegung gedreht. Auf diese Weise kann erreicht werden, dass eine äußere Oberfläche des Werkstücks beim anfänglichen Einführen des Befestigungselements in die Bohrung nicht beschädigt wird.

In einer bevorzugten Variante weist das Befestigungselement spezielle Räumelemente auf, welche das Entfernen bzw. Verdrängen der jeweiligen Fremdkörper in der Bohrung des Werkstücks bei seiner Drehung begünstigen. Da das Einklemmen von Fremdkörpern zwischen der Stirnseite in Einbringungsrichtung des Befestigungselements und dem Boden der jeweiligen Sacklochbohrung bzw. auf der unteren Decke besonders kritisch ist da durch das Auftreten der jeweiligen Fremdkörper die untere Decke beschädigt werden kann, ist es besonders bevorzugt, an dem Befestigungselement Räumvorrichtungen derart vorzusehen, dass sie die den Boden einer entsprechenden Sacklochbohrung bzw. die untere Decke zumindest im Bereich der stirnseitigen Kontaktflächen des Befestigungselements im Wesentlichen Freiräumen. Dies kann beispielsweise durch nicht-radial angeordnete flügelförmige Räumelemente an der Stirnseite des Befestigungselements erreicht werden, oder durch eine spiralförmige Anordnung von Räumelementen an der Stirnseite.

Durch die Drehung des Befestigungselements beim Einsetzen in die Bohrung werden die sich auf dem Boden des der Sacklochbohrung oder der unteren Decke in dem Werkstück befindlichen Fremdkörper durch die entsprechenden Räumelemente, je nach relativer Drehrichtung, entweder nach innen oder nach außen verdrängt. Auf diese Weise kann erreicht werden, dass zwischen der Stirnseite des Befestigungselements und dem Boden der Sacklochbohrung bzw. der unteren Decke in dem Werkstück Fremdkörper zuverlässig so verdrängt oder verschoben werden, dass eine Beschädigung des Werkstücks vermeiden werden kann.

In einer weiteren bevorzugten Variante wird das Eintreiben des Befestigungselements und das Drehen des Befestigungselements derart gesteuert, dass das Befestigungselement zunächst eine vorbestimmte Wegstrecke in das Bohrloch eingeführt wird, dann das Befestigungselement mit einer Drehung beaufschlagt wird, und dann das Befestigungselement drehend vollständig in das Bohrloch eingeführt wird.

Auf diese Weise wird auch eine Beschädigung der oberen Decke des Werkstücks beim Einführen des Befestigungselements durch die Räumvorrichtungen an der Stirnseite des Befestigungselements vermieden.

In einer weiteren bevorzugten Variante wird das Einbringen und insbesondere der Vorschub des Befestigungselements in die Bohrung über einen Kraftsensor gesteuert, der die Einpresskraft des Befestigungselements in das Bohrloch weitgehend konstant hält. Hierdurch kann beispielsweise eine Situation auftreten, in der das Befestigungselement an einer bestimmten Stelle inne hält und nur noch eine Drehbewegung ausführt, um auf diese Weise ein eventuell vorhandenen Fremdkörper von der entsprechenden blockierenden Stelle räumt. Hierdurch wird insbesondere vermieden, dass das Befestigungselement die untere Decke oder den Boden der Sacklochbohrung durchdrückt.

In einer weiteren bevorzugten Variante wird mittels des Drehens des Befestigungselements zumindest ein Teil der Bohrung in das Werkstück eingebracht. Insbesondere kann durch die Drehung des Befestigungselements ein innerer Bereich, beispielsweise ein Füllmaterial oder eine Wabe einer Leichtbauplatte mittels der Drehung des Befestigungselements gebohrt bzw. geschnitten werden. Weiterhin kann durch die Bohrwirkung bei gleichzeitiger Drehung des Befestigungselements erreicht werden, dass die jeweiligen Kontaktflächen zwischen dem Befestigungselement und dem Werkstück weitgehend frei von Fremdkörpern sind.

In einer bevorzugten Variante wird durch das Aufbringen der Drehbewegung auch erreicht, dass ein Teil des Befestigungsmittels aufgeschmolzen wird und sich entsprechend mit dem Werkstück verbindet, insbesondere verklebt. Dieser Prozess des Reibschweissens führt zu einer besonders effizienten Einbringung des Befestigungselements. Die Bedingungen lassen sich über eine Variation der Drehzahl, des Anpressdrucks und der Materialien anpassen.

Die Drehzahl des Befestigungselements und/oder die Einpresskraft wird bevorzugt je nach Parametern bestimmt, beispielsweise abhängig von dem Durchmesser des Bohrloches und des Befestigungselements, von dem Material des Werkstücks und von dessen Dicke.

### KURZE BESCHREIBUNG DER FIGUREN

Die Erfindung wird im Folgenden detaillierter unter Bezugnahme auf die Zeichnungen beschrieben werden, in denen:
- Fig. 1: eine schematische perspektivische Darstellung eines Befestigungselements ist, welches mit dem Verfahren eingebracht werden kann;
- Fig. 2: eine Seitenansicht auf die im Befestigungselement der Fig. 1 vorgesehene Spreizvorrichtung ist;
- Fig. 3: eine Draufsicht auf die Spreizvorrichtung der Fig. 3 ist;
- Fig. 4: eine Ansicht von unten auf einen Räumerdeckel für das Befestigungselement der Fig. 1-3 ist;
- Fig. 5: eine perspektivische Seitenansicht des Räumerdeckels der Fig. 4 ist;
- Fig. 6: eine schematische perspektivische Darstellung einer Vorrichtung zur Durchführung des Verfahrens ist;
- Fig. 7: eine schematische Unteransicht auf die Vorrichtung der Fig. 6 ist; und
- Fig. 8: eine schematische perspektivische Detailansicht der Vorrichtung gemäß der Fig. 6 und 7 ist.

### DETAILLIERTE BESCHREIBUNG

In der folgenden Beschreibung eines exemplarischen Ausführungsbeispiels einer Befestigungsvorrichtung sowie eines exemplarischen Ausführungsbeispiels einer Vorrichtung zur Durchführung des Verfahrens werden für gleiche oder ähnliche die gleichen Bezugzeichen verwendet, und auf eine erneute Beschreibung der jeweiligen Merkmale wird im Allgemeinen verzichtet.

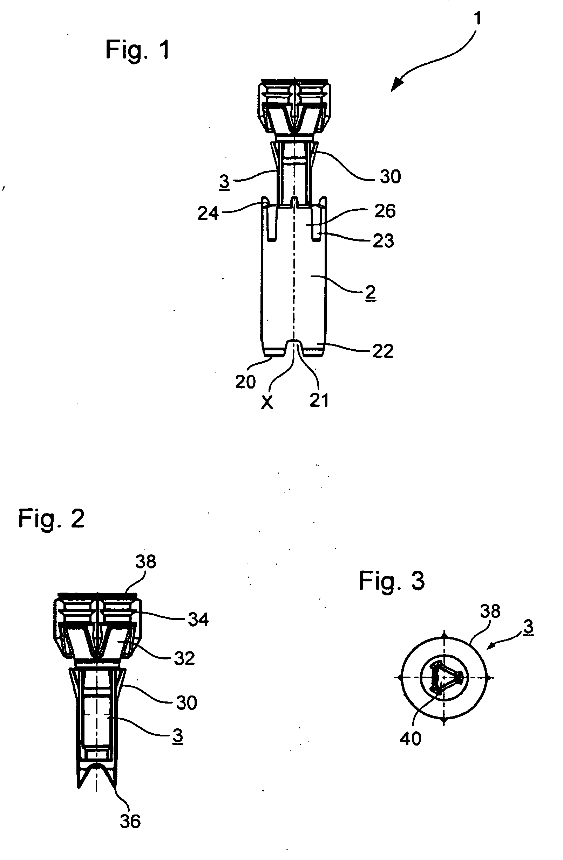

Fig. 1 zeigt eine perspektivische Seitenansicht auf das Befestigungselement 1, welches mit dem in Anspruch 1 beanspruchten Verfahren in ein Werkstück (nicht gezeigt) eingebracht werden kann.

Das Befestigungselement 1 weist eine Spreizhülse 2 zum Befestigen des Befestigungselements 1 in dem Werkstück, und eine Spreizvorrichtung 3 zum zumindest teilweisen Spreizen der Spreizhülse 2 auf. Die Spreizvorrichtung 3 ist dabei drehfest in der Spreizhülse 2 eingesetzt, so dass eine Drehbewegung von der Spreizvorrichtung 3 auf die Spreizhülse 2 übertragen werden kann. Trotz der drehfesten Anordnung kann die Spreizvorrichtung 3 entlang der Längsachse X des Befestigungselements 1 verschoben werde und insbesondere zur Verspreizung bestimmter Bereiche der Spreizhülse 2 in diese eingeführt werden.

Die Spreizhülse 2 weist eine Stirnseite 20 auf, welche zuerst in das Bohrloch (nicht gezeigt) in dem Werkstück eingeführt wird. Durch das Vorsehen von Einschnitten 21 in der Spreizhülse 2 werden im stirnseitigen Bereich 20 der Spreizhülse 2 Spreizflügel 22 ausgebildet, die sich durch ein Auseinanderpressen der Spreizhülse 2 mit den Randbereichen eines sich in diesem Bereich befindlichen Bohrlochrandes verspreizten können.

In einer Variante weist die Spreizhülse 2 ebenfalls die gezeigten Einschnitte 21 auf, das dazwischen befindliche Material in Form der Flügel 22 wird allerdings beim Montieren nicht verspreizt. Die Einschnitte 21 dienen dazu, dass ein sich in der Spreizhülse 2 befindlicher Klebstoff (nicht gezeigt) austreten kann. Dieses Austreten bzw. Austreiben des Klebstoffs kann beispielsweise durch das Eintreiben der Spreizvorrichtung 3 in die Spreizhülse erreicht werden. Der austretende Klebstoff kann dann mit einer sich auf der Stirnseite 20 anstehenden Decke des Werkstücks in Kontakt treten und das Befestigungselement 1 mit der Decke bzw. dem Werkstück verkleben. In diesem Fall ist auch eine Sacklochbohrung in der unteren Decke einer Leichtbauplatte nicht vorgesehen, was insbesondere bei besonders dünnen Decken von Vorteil ist.

Im rückwärtigen Bereich 24 der Spreizhülse 2 sind ebenfalls Ausnehmungen/Einschnitte 23 vorgesehen, welche auch hier Spreizflügel 26 ausbilden. Diese Spreizflügel 26 verkrallen sich, wenn sie in der Endposition der Spreizhülse 2 in der Leichtbauplatte eingebracht sind, unter der oberen Decke der Leichtbauplatte, so dass die Spreizhülse 2 in ihrem stirnseitigen Bereich 20 am Boden einer Sacklochbohrung bzw. auf der unteren Decke der Leichtbauplatte und an ihrem rückwärtigen Ende 24 unter der oberen Decke verklemmt ist.

Die Spreizvorrichtung 3, welche noch einmal separat in Fig. 2 gezeigt ist, umfasst an ihrer Seite Arretierflügel 30, welche auf der Innenseite der Spreizhülse 2 im eingepressten Zustand verrasten.

Weiterhin ist ein konischer Abschnitt 32 vorgesehen, welcher zur Spreizung der Spreizflügel 26 der Spreizhülse 2 dient. Arretierhaken 34 sind vorgesehen, die in dem Kopfbereich der Spreizvorrichtung 3 vorgesehen sind und welche mit der Bohrungswand in der oberen Decke der Leichtbauplatte in Eingriff gebracht werden.

Am unteren Ende der Spreizvorrichtung 3 ist ein scharfkantiger Bereich 36 vorgesehen, welcher dazu dient, einen in der Spreizhülse 2 vorgesehenen Klebstoffvorrat (nicht gezeigt) zu aktivieren und entsprechend einen Klebstoffaustritt aus den jeweiligen Ausnehmungen 21, 23 der Spreizhülse 2 zu ermöglichen, um das Befestigungselement 1 zusätzlich zu der Verspreizung auch in der Leichtbauplatte zu verkleben.

Fig. 3 zeigt den Kopf 38 der Spreizvorrichtung 3 in einer Draufsicht detailliert. Hier ist ein Eingriffbereich 40 gezeigt, in welchem eine Schrauberklinge einer später diskutierten Vorrichtung zum Einbringen des Befestigungselements eingreifen kann. Da die Spreizvorrichtung 3 drehfest in die Spreizhülse 2 eingesetzt ist, insbesondere durch einen polygonalen Querschnitt der Spreizvorrichtung 3, welche in einer polygonalen Ausnehmung in der Spreizhülse 2 eingreift, ist es daher möglich, über die Ausnehmung 40 über eine Schrauberklinge eine Drehbewegung von der Spreizvorrichtung auf die Spreizhülse 2 aufzubringen.

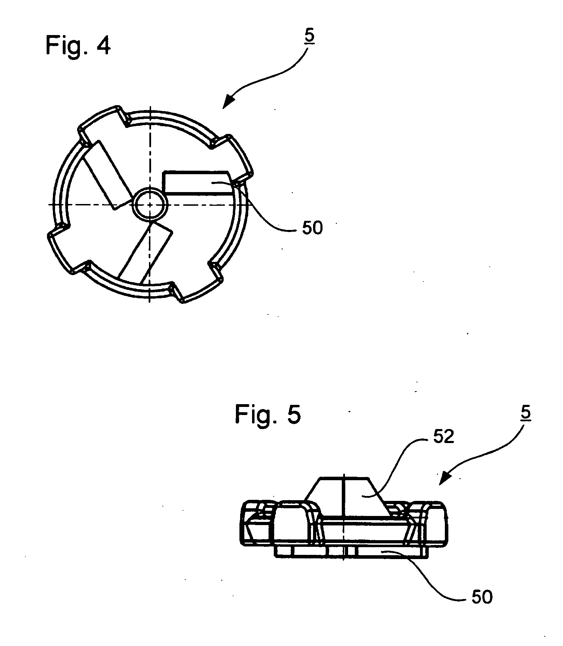

Fig. 4 und 5 zeigen einen Räumerdeckel 5, welcher an der Stirnseite 20 der Spreizhülse 2 auf deren Innenseite angebracht ist und welcher mit flügelförmigen Räumelementen 50 ausgestattet ist, welche nicht radial angeordnet sind, so dass bei einer Drehung des Räumerdeckels 50 stirnseitig angeordnete Fremdkörper aus dem Weg geräumt werden. Abhängig von der Drehrichtung wirken die flügelförmigen Räumelemente 50 des Räumerdeckels 5 entweder so, dass die Fremdkörper nach außen verdrängt werden (entgegen der Uhrzeigerrichtung in Fig. 4) oder in Richtung der Mitte des Räumerdeckels 5 gefördert werden (in Uhrzeigerrichtung in Fig. 4). Der Räumerdeckel 5, welcher in den Fig. 4 und 5 gezeigt ist, wird am stirnseitigen Ende 20 der Spreizhülse 2 innerhalb der Spreizhülse drehfest geführt.

Weiterhin ist ein Dorn 52 auf der den flügelförmigen Räumelementen 50 entgegen gesetzten Seite des Räumerdeckels 5 vorgesehen, welcher Dorn 52 dazu dient, den in der Spreizhülse 2 aufgenommen Klebstoffvorrat zu aktivieren, insbesondere eine Viole oder eine Folie zu durchstechen.

Der Räumerdeckel 5 wird durch die sich drehende Spreizhülse 2 in ihrer Drehbewegung mitgenommen.

Zum Einsetzen des Befestigungselements 1 in ein Werkstück, insbesondere eine Leichtbauplatte, wird das Befestigungselement 1 im Wesentlichen so, wie es in Fig. 1 gezeigt ist, einer Vorrichtung zum Einsetzen zugeführt. Der stirnseitige Abschnitt 20 der Spreizhülse 2 wird dann in die in dem Werkstück eingebrachte Bohrung eingesetzt und das Befestigungselement 1 wird vorgetrieben. Sobald die Spreizhülse 2 ein vorbestimmtes Stück in das Bohrloch hinein eingeschoben wurde, wird eine Drehbewegung aufgebracht, so dass sich die Spreizhülse 2 zusammen mit der Spreizvorrichtung 3 dreht. Im Stirnbereich 20 möglicherweise vorhandene Fremdkörper werden auf diese Weise verdrängt, so dass der stirnseitige Abschnitt 20 des Befestigungselements 1 sicher in Anlage mit einem Boden eines Sacklochs in dem Werkstück kommt.

Ein weiteres Eintreiben des Befestigungselements 1 führt dazu, dass die Spreizvorrichtung 3 relativ zu der Spreizhülse 2 in die Spreizhülse eingetrieben wird, wodurch zum Einen durch den konischen Bereich 32 eine Aufspreizung der Spreizflügel 26 der Spreizhülse 2 stattfindet und dadurch eine zuverlässige Verklemmung, Verankerung oder Arretierung der Spreizhülse 2 zwischen den beiden äußeren Decken einer Leichtbauplatte stattfindet. Zum Anderen wird ein in der Spreizhülse 2 vorgesehener Klebstoffvorrat (nicht gezeigt) durch die Schneidelemente 36 am vorderen Ende der Spreizvorrichtung 3 aktiviert. Durch weiteres Eintreiben der Spreizvorrichtung 3 in die Spreizhülse 2 wird der sich darin befindliche Klebstoff durch die in der Spreizhülse 2 vorgesehenen Ausnehmungen 21, 23 nach außen verdrängt, so dass eine Verklebung der Spreizhülse 2 mit den Decken stattfinden kann.

Die Arretierflügel 30 in der Spreizvorrichtung 3 verrasten in der Endposition in der Spreizhülse 2, so dass der konische Abschnitt 32 die Spreizvorrichtung 3 nicht aus der Spreizhülse 2 heraustreiben kann, solange der Klebstoff noch nicht ausgehärtet ist.

Der wesentliche Punkt beim Einsetzen des Befestigungselements 1 in eine Werkstück ist, das das Befestigungselement 1 beim Einsetzen um seine Längsachse X herum gedreht wird, um Fremdkörper, die in der Bohrung in dem Werkstück vorhanden sein können, zu verdrängen und die Kontaktflächen zwischen dem Befestigungselement 1 und dem Werkstück frei von Fremdkörpern zu halten.

In einer bevorzugten Variante wird durch das Aufbringen der Drehbewegung auch erreicht, dass ein Teil des Befestigungsmittels 1 aufgeschmolzen wird und sich entsprechend mit dem Werkstück verbindet, insbesondere verklebt. Dieser Prozess des Reibschweissens führt zu einer besonders effizienten Einbringung des Befestigungselements. Die Bedingungen lassen sich über eine Variation der Drehzahl, des Anpressdrucks und der Materialien anpassen.

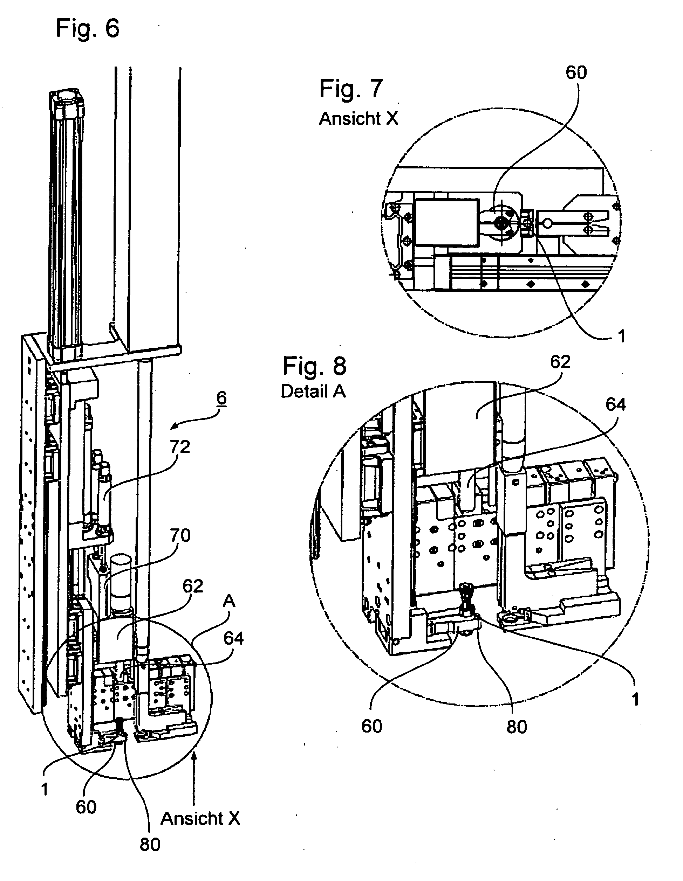

In den Fig. 6-8 ist eine Vorrichtung zur Durchführung dieses Verfahrens gezeigt. Insbesondere ist in Fig. 6 eine schematische perspektivische Darstellung eines entsprechenden Aggregats 6 gezeigt, welches eine Aufnahmevorrichtung 60 zur Aufnahme eines Befestigungselements 1 aufweist.

Weiterhin ist eine Einbringeinheit 62 vorgesehen, die in der Z-Richtung zum Einbringen des Befestigungselements 1 in das jeweilige Werkstück verfahrbar ist und welche ein Drehsmittel 64 in Form einer mit der Ausnehmung 40 formschlüssig in Eingriff bringbaren Schrauberklinge, insbesondere in Form eines Dreikants, aufweist, zum Drehen des Befestigungselements 1 während des Eintreibens der Z-Richtung.

Um auf das Befestigungselement 1 einen Impuls aufbringen zu können, insbesondere in Form eines "hämmerns", ist an dem Aggregat 6 mindestens ein Hydraulikzylinder 72 vorgesehen, der eine Masse 70 zyklisch bewegt. Die Masse 70 wirkt auf die Einbringeinheit 62 und entsprechend über die Schrauberklinge 64 auf das Befestigungselement 1.

Durch das Aufbringen des mindestens einen Impulses auf das Befestigungselement 1 kann beispielsweise nach dem Einsetzen der Spreizhülse 2 in das Werkstück erreicht werden, dass das Spreizelement 3 vollständig in die Spreizhülse 2 eingetrieben wird. Dabei wird ein sich in der Spreizhülse befindlicher Klebstoffvorrat (nicht gezeigt) aktiviert und aus den Einschnitten 21, 23 aus der Spreizhülse herausgedrückt, um so in Kontakt mit dem Werkstück zu kommen.

Die Aufbringung der Impulse auf das Befestigungselement 1 mittels der Masse 70 findet solange statt, bis sich das Befestigungselement 1 in einer Endlage befindet. Beispielsweise kann dies über einen Planlagesensor 80 festgestellt werden, der den Überstand des Befestigungselements 1 über der Oberfläche des Werkstücks bestimmt und bei Erreichen einer entsprechenden Einbringtiefe des Befestigungselements 1 das Aufbringen weiterer Impulse stoppt.

Auf die übrigen in den Fig. 6-8 gezeigten Bestandteile des Aggregats 6 wird nicht weiter eingegangen.

Wesentlich ist, dass das Aggregat 6 eine Aufnahmevorrichtung zum Halten des Befestigungselements 1 aufweist, wobei die Aufnahmevorrichtung ebenso zur Positionierung des Befestigungselements 1 über der Bohrung in dem Werkstück dient, sowie eine Einbringeinheit 62, welche in Z-Richtung verfahrbar ist, um das Befestigungselement 1 in ein Bohrloch einzutreiben, sowie Antriebsmittel 64 um das Befestigungselement 1 in eine Drehbewegung zu versetzen.

## Patentansprüche

1. Verfahren zum Einbringen eines Befestigungselements (1), insbesondere eines Dübels, in eine Leichtbauplatte mit einer oberen Decke und einer unteren Decke, mit den Schritten:
Aufnehmen und relatives Positionieren des Befestigungselements (1) bezüglich der Leichtbauplatte mittels einer Aufnahmevorrichtung (60),
Einbringen einer Bohrung zumindest in die obere Decke der Leichtbauplatte und anschließend Einbringen des Befestigungselements in die Bohrung in der oberen Decke mittels einer Einbringeinheit (62) zum Einbringen des Befestigungselements unter Beaufschlagung mit einer Drehbewegung, wobei das Befestigungselement während des Einbringens in die Bohrung in der Leichtbauplatte zur Verdrängung von Fremdkörpern gedreht wird,
Aufbringen eines Impulses auf das Befestigungselement mittels mindestens eines Impulsaufbringungsmittels (70, 72), wobei das Impulsaufbringungsmittel insbesondere auf die Einbringeinheit wirkt und ein Planlagesensor (80) vorgesehen ist, der den Überstand des Befestigungselements (1) über der Oberfläche der Leichtbauplatte bestimmt und bei Erreichen einer entsprechenden Einbringtiefe des Befestigungselements (1) das Aufbringen weiterer Impulse stoppt.

2. Verfahren gemäß Anspruch 1, wobei das Befestigungselement (1) mindestens eine Spreizhülse (2) zur Verankerung des Befestigungselements in dem Werkstück, und mindestens eine Spreizvorrichtung (3) zum zumindest teilweisen Spreizen der Spreizhülse (2) umfasst, wobei die Spreizhülse (2) während des Einbringens in die Bohrung des Werkstücks zur Verdrängung von Fremdkörpern gedreht wird.

3. Verfahren gemäß Anspruch 2, wobei nach dem Einbringen der Spreizhülse (2) in die Bohrung der Leichtbauplatte die Spreizvorrichtung (3) zum Verspreizen der Spreizhülse (2) in der Bohrung der Leichtbauplatte in die Spreizhülse (2) eingetrieben wird.

4. Verfahren gemäß Anspruch 2 oder 3, wobei die Spreizhülse (2) mit der in einer Vormontageposition in der Spreizhülse (2) angeordneten Spreizvorrichtung (3) gemeinsam in der Leichtbauplatte eingebracht werden.

5. Verfahren gemäß einem der Ansprüche 2 bis 4, wobei die Spreizhülse (2) und die Spreizvorrichtung (3) drehfest zueinander angeordnet sind, und die Drehung der Spreizhülse (2) über die Spreizvorrichtung (3) aufgebracht wird.

6. Verfahren gemäß einem der vorstehenden Ansprüche, wobei zum Aufbringen der Drehung des Befestigungselements (1) während des Einbringens ein Drehmittel (64), insbesondere eine Schrauberklinge, in das Befestigungselemen (1) eingreift, insbesondere im Bereich der Spreizvorrichtung (3).

7. Verfahren gemäß einem der vorstehenden Ansprüche, wobei beim Einbringen des Befestigungselements (1) in der Leichtbauplatte ein Klebstoffvorrat aktiviert wird, um das Befestigungselement (1) mit der Leichtbauplatte zu verbinden.

8. Verfahren gemäß einem der vorstehenden Ansprüche, wobei das Befestigungselement (1) nur in einem Teilbereich, insbesondere dem Endbereich, der Einbringbewegung gedreht wird.

9. Verfahren gemäß einem der vorstehenden Ansprüche, wobei das Eintreiben des Befestigungselements (1) und das Drehen des Befestigungselements (1) derart gesteuert wird, dass das Befestigungselement (1) zunächst eine vorbestimmte Wegstrecke in das Bohrloch eingeführt wird, dann das Befestigungselement (1) mit einer Drehung beaufschlagt wird, und dann das Befestigungselement (1) drehend vollständig in das Bohrloch eingeführt wird.

10. Verfahren gemäß einem der vorstehenden Ansprüche, wobei das Einbringen des Befestigungselements (1) mittels eines Vorschubkraftsensors gesteuert wird, wobei insbesondere die Vorschubkraft im Wesentlichen konstant gehalten wird.

11. Verfahren gemäß einem der vorstehenden Ansprüche, wobei auf das Befestigungselement (1) während des Einbringens mindestens ein Impuls zum Eintreiben des Befestigungselements (1) in der Leichtbauplatte aufgebracht wird und durch das Aufbringen des Impulses insbesondere ein sich in dem Befestigungselement (1) befindlicher Klebstoffvorrat aktiviert wird und insbesondere aus dem Befestigungselement (1) verdrängt wird.

12. Verfahren gemäß einem der vorstehenden Ansprüche, wobei mittels des Drehens des Befestigungselements (1) zumindest ein Teilbereich der Bohrung in der Leichtbauplatte hergestellt wird.

13. Verfahren gemäß einem der vorstehenden Ansprüche, wobei das Befestigungselement (1) durch die Drehung mit der Leichtbauplatte verbunden wird, insbesondere durch Reibschweissen.

## Claims

1. Method for inserting a fastening element (1), in particular a dowel, in a lightweight building board having an upper sheet and a lower sheet, with the steps of:
receiving and relative positioning of the fastening element (1) in relation to the lightweight building board by means of a receiving device (60),
making a hole at least in the upper sheet of the lightweight building board and then inserting the fastening element in the hole in the upper sheet by means of an insertion unit (62) for inserting the fastening element while applying a rotational movement, wherein the fastening element is rotated during insertion in the hole in the lightweight building board for the displacement of foreign bodies,
applying an impulse to the fastening element by means of at least one impulse-applying means (70, 72), wherein the impulse-applying means in particular acts on the insertion unit and a flatness sensor (80) is provided, which determines the amount by which the fastening element (1) protrudes above the surface of the lightweight building board and, on reaching a corresponding depth of insertion of the fastening element (1), stops the application of further impulses.

2. Method according to claim 1, wherein the fastening element (1) comprises at least one expanding sleeve (2) for anchoring the fastening element in the workpiece, and at least one expanding device (3) for at least partially expanding the expanding sleeve (2), wherein the expanding sleeve (2) is rotated during insertion in the hole in the workpiece for the displacement of foreign bodies.

3. Method according to claim 2, wherein, after insertion of the expanding sleeve (2) in the hole in the lightweight building board, the expanding device (3) is driven into the expanding sleeve (2) for expanding the expanding sleeve (2) in the hole in the lightweight building board.

4. Method according to claim 2 or 3, wherein the expanding sleeve (2) together with the expanding device (3) disposed in a pre-assembly position in the expanding sleeve (2) is inserted in the lightweight building board.

5. Method according to any of claims 2 to 4, wherein the expanding sleeve (2) and the expanding device (3) are disposed non-rotatably in relation to each other, and rotation of the expanding sleeve (2) is applied via the expanding device (3).

6. Method according to any of the preceding claims, wherein for application of the rotation of the fastening element (1) during insertion a rotating means (64), in particular a screwdriver blade, engages in the fastening element (1), in particular in the region of the expanding device (3).

7. Method according to any of the preceding claims, wherein on insertion of the fastening element (1) in the lightweight building board an adhesive supply is activated to join the fastening element (1) to the lightweight building board.

8. Method according to any of the preceding claims, wherein the fastening element (1) is rotated only in a partial region, in particular the end region, of the insertion movement.

9. Method according to any of the preceding claims, wherein driving in of the fastening element (1) and rotation of the fastening element (1) are controlled in such a way that the fastening element (1) is first inserted a predetermined distance in the hole, then the fastening element (1) is subjected to a rotation, and then the fastening element (1) is fully inserted in the hole by rotation.

10. Method according to any of the preceding claims, wherein insertion of the fastening element (1) is controlled by means of a feed pressure sensor, wherein in particular the feed pressure is kept substantially constant.

11. Method according to any of the preceding claims, wherein at least one impulse for driving the fastening element (1) into the lightweight building board is applied to the fastening element (1) during insertion, and by application of the impulse in particular an adhesive supply located in the fastening element (1) is activated and in particular forced out of the fastening element (1).

12. Method according to any of the preceding claims, wherein by means of rotation of the fastening element (1) at least a partial region of the hole is made in the lightweight building board.

13. Method according to any of the preceding claims, wherein the fastening element (1) is joined to the lightweight building board by the rotation, in particular by friction welding.

## Revendications

1. Procédé d'insertion d'un élément de fixation (1), en particulier d'une cheville, dans un panneau léger de construction comportant une dalle supérieure et une dalle inférieure, comprenant les étapes suivantes :
réception et positionnement relatif de l'élément de fixation (1) par rapport au panneau léger de construction, au moyen d'un dispositif de réception (60),
réalisation d'un perçage au moins dans la dalle supérieure du panneau léger de construction puis insertion de l'élément de fixation dans le perçage de la dalle supérieure au moyen d'une unité d'insertion (62) pour l'insertion de l'élément de fixation par application d'un mouvement de rotation, l'élément de fixation étant tourné pendant l'insertion dans le perçage du panneau léger de construction pour refouler les corps étrangers,
application d'une impulsion sur l'élément de fixation au moyen d'au moins un moyen d'application d'impulsion (70, 72), le moyen d'application d'impulsion agissant en particulier sur l'unité d'insertion et un capteur de planéité (80) étant prévu, lequel détermine le dépassement de l'élément de fixation (1) à la surface du panneau léger de construction et arrête l'application d'autres impulsions une fois atteinte une profondeur d'insertion correspondante de l'élément de fixation (1).

2. Procédé selon la revendication 1, où l'élément de fixation (1) comprend au moins une coquille d'expansion (2) pour l'ancrage de l'élément de fixation dans le pièce d'oevre, et au moins un dispositif d'expansion (3) pour l'expansion au moins partielle de la coquille d'expansion (2), la coquille d'expansion (2) étant tournée pendant l'insertion dans le perçage du panneau léger de construction pour refouler les corps étrangers.

3. Procédé selon la revendication 2, où, après insertion de la coquille d'expansion (2) dans le perçage du panneau léger de construction, le dispositif d'expansion (3) pour l'expansion de la coquille d'expansion (2) dans le perçage du panneau léger de construction est enfoncé dans la coquille d'expansion (2).

4. Procédé selon la revendication 2 ou la revendication 3, où la coquille d'expansion (2) est insérée dans le panneau léger de construction avec le dispositif d'expansion (3) disposé en position de pré-montage dans la coquille d'expansion (2).

5. Procédé selon l'une des revendications 2 à 4, où la coquille d'expansion (2) et le dispositif d'expansion (3) sont solidaires en rotation, et où la rotation de la coquille d'expansion (2) est entraînée par l'intermédiaire du dispositif d'expansion (3).

6. Procédé selon l'une des revendications précédentes, où pour l'entraînement en rotation de l'élément de fixation (1) pendant l'insertion, un moyen de rotation (64), en particulier une lame de tournevis, est engagé dans l'élément de fixation (1), en particulier au niveau du dispositif d'expansion (3).

7. Procédé selon l'une des revendications précédentes, où un réservoir de colle est activé lors de l'insertion de l'élément de fixation (1) dans le panneau léger de construction, pour raccorder l'élément de fixation (1) au panneau léger de construction.

8. Procédé selon l'une des revendications précédentes, où l'élément de fixation (1) n'est soumis au mouvement d'insertion par rotation que dans une zone partielle, en particulier la zone d'extrémité.

9. Procédé selon l'une des revendications précédentes, où l'enfoncement de l'élément de fixation (1) et la rotation de l'élément de fixation (1) sont commandés de telle manière que l'élément de fixation (1) est d'abord introduit dans le trou de perçage sur une course définie, l'élément de fixation (1) étant ensuite soumis à une rotation, et l'élément de fixation (1) étant enfin complètement introduit par rotation dans le trou de perçage.

10. Procédé selon l'une des revendications précédentes, où l'insertion de l'élément de fixation (1) est commandée au moyen d'un capteur de force d'avance, la force d'avance étant notamment maintenue constante.

11. Procédé selon l'une des revendications précédentes, où au moins une impulsion pour l'enfoncement de l'élément de fixation (1) dans le panneau léger de construction est appliquée sur l'élément de fixation (1) pendant l'insertion, et où un réservoir de colle se trouvant dans l'élément de fixation (1) est notamment activé par l'application de l'impulsion, et est notamment chassé de l'élément de fixation (1) .

12. Procédé selon l'une des revendications précédentes, où au moins une zone partielle du perçage est réalisée dans le panneau léger de construction par la rotation de l'élément de fixation (1).

13. Procédé selon l'une des revendications précédentes, où l'élément de fixation (1) est raccordé par la rotation au panneau léger de construction, en particulier par soudage par friction.
